# EUROPEAN PATENT SPECIFICATION

(11) **EP 4 503 752 B1**
(45) Date of publication and mention of the grant of the patent: **21.01.2026**
(21) Application number: 23188820.7
(22) Date of filing: 31.07.2023
(51) Int. Cl.: H04W 48/16, H04W 48/20, H04W 48/12

(54) **TRANSMISSION OF RECEPTION MEASUREMENT DATA FOR SUBSEQUENT NETWORK SELECTION BY A MOBILE STATION ACCORDING TO AN ENHANCED CELL SELECTION CRITERION BASED ON AN OPERATOR-CONTROLLED SIGNAL THRESHOLD**
ÜBERTRAGUNG VON EMPFANGSMESSDATEN ZUR NACHFOLGENDEN NETZAUSWAHL DURCH EINE MOBILSTATION NACH EINEM ERWEITERTEN ZELLAUSWAHLKRITERIUM GEMÄSS EINEM NETZBETREIBER-KONTROLLIERTEN SIGNALSCHWELLWERT
TRANSMISSION DE DONNÉES DE MESURE DE RÉCEPTION POUR UNE SÉLECTION DE RÉSEAU ULTÉRIEURE PAR UNE STATION MOBILE SELON UN CRITÈRE REHAUSSÉ DE SÉLECTION DE CELLULE BASÉ SUR UN SEUIL DE SIGNAL CONTROLÉ PAR UN OPERATEUR DE RÉSEAU

(43) Date of publication of application: 05.02.2025
(73) Proprietor: Deutsche Telekom AG, 53113 Bonn (DE)
(72) Inventor: NEUBACHER, Andreas, 2100 Korneuburg (AT)
(74) Representative: Schwöbel, Thilo K.

(56) References cited:
- EP-A1- 4 002 923
- AKANSHA ARORA ET AL: "CP-SOR for SENSE capable UE", vol. 3GPP CT 1, no. Bratislava, SK; 20230522 - 20230526, 30 May 2023 (2023-05-30), XP052380716, Retrieved from the Internet <URL:https://www.3gpp.org/ftp/tsg_ct/WG1_mm-cc-sm_ex-CN1/TSGC1_142_Bratislava/Docs/C1-233865.zip C1-233865_was_C1-233439_TS23.122_CP-SOR for SENSE capable UE_r7.docx> [retrieved on 20230530]
- REINHARD LAUSTER ET AL: "Signal level enhanced network selection requirements for PLMN selection", vol. 3GPP CT 1, no. Athens, GR; 20230227 - 20230303, 17 February 2023 (2023-02-17), XP052238405, Retrieved from the Internet <URL:https://www.3gpp.org/ftp/tsg_ct/WG1_mm-cc-sm_ex-CN1/TSGC1_140_Athens/Docs/C1-230063.zip C1-230063_SENSE_requirements_PLMN.docx> [retrieved on 20230217]

## Description

### BACKGROUND

The present invention relates to a method for transmitting reception measurement data and/or for subsequently conducting network selection by a mobile station being in a radio environment comprising a plurality of available radio cells of a plurality of mobile communication networks, each one of these available radio cells being associated, respectively, to at least one mobile communication network of the plurality of mobile communication networks,
wherein the mobile station is related or associated to a home mobile communication network, and wherein, while being in the considered radio environment, the mobile station is able to measure or to detect reception conditions regarding the plurality of available radio cells.

Furthermore, the present invention relates to a mobile station for transmitting reception measurement data and/or for subsequently conducting network selection by a mobile station being in a radio environment comprising a plurality of available radio cells of a plurality of mobile communication networks, each one of these available radio cells being associated, respectively, to at least one mobile communication network of the plurality of mobile communication networks,
wherein the mobile station is related or associated to a home mobile communication network, and wherein, while being in the considered radio environment, the mobile station is able to measure or to detect reception conditions regarding the plurality of available radio cells.

Furthermore, the present invention relates to a system or to a mobile communication network for transmitting reception measurement data and/or for subsequently conducting network selection of a mobile station being in a radio environment comprising a plurality of available radio cells of a plurality of mobile communication networks, each one of these available radio cells being associated, respectively, to at least one mobile communication network of the plurality of mobile communication networks,
wherein, and wherein, while being in the considered radio environment, the mobile station is able to measure or to detect reception conditions regarding the plurality of available radio cells.

Furthermore, the present invention relates to a program and to a computer-readable medium for transmitting reception measurement data and/or for subsequently conducting network selection by a mobile station being in a radio environment comprising a plurality of available radio cells of a plurality of mobile communication networks according to the inventive method.

Typically, a mobile communication network (or: cellular mobile communication network) comprises a plurality of radio cells (i.e., typically, a plurality of base station entities) at different geographical locations, thereby covering (or: providing radio coverage to) a certain geographical area.

In currently deployed mobile communication networks, a mobile station (typically a user equipment) - being located at a considered location - typically experiences a radio environment comprising a plurality of radio cells.

One such radio cell (of typically a plurality radio cells), 'seen' by the mobile station or user equipment, is normally provided by a base station entity, hence, in this case, the radio environment of the mobile station comprises the considered radio cell.

Typically, the plurality of radio cells of the radio environment of the mobile station are part of a plurality of mobile communication networks. Hence, by means of selecting a radio cell, the mobile station also selects a mobile communication network. However, before a mobile communication network is considered as a network selection candidate at all, the mobile station needs to find a suitable radio cell of a mobile communication network or public land mobile network to camp on. The criteria for a radio cell to be considered as suitable radio cell (to camp on), is dependent on the considered network technology (or radio access technology) being defined in or by means of the relevant standardization documents, mostly referred to as 3GPP (third generation partnership project) documents.

The (initial) selection of a mobile network by a mobile station or user equipment (network selection after power-on of the device or loss of connection) is specified (among others) in TS 23.122 and TS 22.011 and is able to be summarized as follows:
-- the mobile station or user equipment does a frequency scan and measures the field-strength/quality of all possible mobile communication networks in the current location of the user equipment;
-- in case the measurement (results) of the user equipment for a certain mobile communication network (i.e. for a certain radio cell of such a mobile communication network) exceeds the threshold given by the respective network (e.g. RXLevMin, or S-Criteria) - also called suitable radio cell - the respective mobile communication networks (or the respective radio cells) that are found are reported, by the access stratum, AS (especially as part of the user equipment or mobile station), to the upper layers for doing a so-called network selection.

During the network selection stage, beside the field-strength/quality used in the initial phase (cf. 3GPP TS 23.122 section: 4.4.3 PLMN selection), additional criteria are typically applied before a certain mobile communication network is actually being selected.

Such additional criteria are, e.g., the "user preferred network list" ("User Controlled PLMN Selector with Access Technology")and the "operator preferred network list" ("Operator controlled PLMN Selector with Access Technology"), which are, especially, stored on the USIM or universal integrated circuit card of the user equipment or mobile station. Beside these mentioned lists, additional criteria and procedures might need to be applied by the considered user equipment, such as, e.g., additional criteria like selection of networks for disaster roaming or for selection of non-public network, NPN, for example in case of "campus networks".

Regarding cell selection by the user equipment (especially the detection of suitable radio cells), it is known to apply - i.e. applied in conventionally known mobile communication networks - an enhanced (and typically HPLMN-provided) cell selection criterion (or SENSE-level or operator-controlled signal threshold (or cell selection criterion) per access technology). This results in considering only such mobile communication networks (corresponding to suitable radio cells of the considered radio access technology) that have or correspond to reception conditions corresponding to or exceeding such predefined enhanced and HPLMN-provided (or operator-controlled) cell selection criterion. As a consequence of applying the enhanced (and typically HPLMN-provided) cell selection criterion or SENSE-level signal threshold (per access technology), a radio cell of a considered radio access technology is considered to be a suitable radio cell only in case that the corresponding reception conditions, as measured by the user equipment or mobile station, correspond to or exceed this HPLMN-provided (or operator-controlled) cell selection criterion regarding the considered radio access technology, i.e. the definition of what is considered to be suitable radio cell is changed by means of applying such HPLMN-provided (or operator-controlled) cell selection criterion.

However, depending on the respective use case or situation of a user equipment, different SENSE-levels, i.e. different values of HPLMN-provided or operator-controlled signal thresholds per access technology (or cell selection criteria) might be best suited to the user equipment because both
-- values of operator-provided cell selection criteria (per access technology) that are too low (regarding a specific user equipment situation or specific reception conditions) as well as
-- values of operator-provided cell selection criteria (per access technology) that are too high
might lead to drawbacks such as, e.g., a well-suited cell is not regarded as a suitable cell (due to the operator-provided cell selection criterion being too high) and/or finding a well-suited cell takes quite an important amount of time (due to the operator-provided cell selection criterion being too low).

Furthermore, depending on the respective use case or situation of a user equipment, such a SENSE-level (or HPLMN-provided or operator-controlled) signal threshold per access technology (or cell selection criterion) may be either preconfigured on the USIM and applied either in the initial (very first) network selection the 3GPP device carries out, or subsequent to a "normal/traditional" network selection without considering operator-controlled signal thresholds. In the prior case, network selection might be delayed (due to setting the SENSE-level signal threshold too aggressively - as possible networks for registration might be omitted in the "first phase of the network selection process"); in the latter case, user equipment may consider a network for the initial network selection without considering the SENSE-level signal threshold with all its associated problems (that lead to the introduction of applying SENSE-level thresholds); again and even worse, it might be the case that the user equipment may not even find at all a network providing a better coverage in case that SENSE-levels are set too aggressively.

Hence, there is a need to provide for a solution such that operator-controlled signal thresholds are able to be adapted to the respective reception conditions of the considered user equipment.

Several methods for realizing cell selection among a plurality of available radio cells are known, which, however, do not involve HPLMN-provided cell selection criteria that depend upon or are adapted to reception conditions measured by the mobile station at the location of the mobile station. These methods include the ones described in EP 4 002 923 A1, in the document by AKANSHA ARORA ET AL: "CP-SOR for SENSE capable UE", 3GPP DRAFT; C1-233865, Change Request 23.122 CR 1013 Revision 7 Version 18.2.0 of the 3GPP TSG-CT WG1 Meeting Nr. 142 and in the document by REINHARD LAUSTER ET AL: "Signal level enhanced network selection requirements for PLMN selection", 3GPP DRAFT; C1-230063, Change Request 23.122 CR 1013 Version 18.1.0 of the 3GPP TSG-CT WG1 Meeting Nr. 140.

### SUMMARY

An object of the present invention is to provide a technically simple, effective and cost-effective solution for performing network selection by a mobile station being in a radio environment comprising a plurality of available radio cells of a plurality of mobile communication networks taking into account prevailing network conditions. A further object of the present invention is to provide a corresponding mobile station or user equipment, a corresponding system or a mobile communication network, and a corresponding program and computer-readable medium.

The object of the present invention is achieved by a method for transmitting reception measurement data and for subsequently conducting network selection by a mobile station according to claim 1.

By means of providing the reception measurement data to the home mobile communication network of the user equipment or mobile station, it is advantageously possible that the home mobile communication network is informed about, and, hence, knows the reception measurement data as measured by the user equipment or mobile station. As a consequence, it is possible for the home mobile communication network to be able to derive an appropriate SENSE-level (or HPLMN-provided or operator-controlled) signal threshold per access technology (or enhanced network selection criterion) - especially to be used for a subsequent network selection.

In conventionally known mobile communication networks, regarding especially the detection of suitable radio cells, it is known to apply an enhanced (and typically HPLMN-provided) network selection criterion (or SENSE-level or operator-controlled signal threshold (or enhanced network selection criterion) per access technology) which results in considering only such mobile communication networks (corresponding to suitable radio cells of the considered radio access technology) that have or correspond to reception conditions corresponding to or exceeding such predefined enhanced and HPLMN-provided (or operator-controlled) network selection criterion. Hence, the definition of what is considered to be suitable radio cell is changed by means of applying such HPLMN-provided (or operator-controlled) network selection criterion as a radio cell of a considered radio access technology (and of a mobile communication network) is considered to be a suitable radio cell only in case that the corresponding reception conditions, as measured by the user equipment or mobile station, correspond to or exceed this HPLMN-provided (or operator-controlled) network selection criterion regarding the considered radio access technology. However, the value of this HPLMN-provided (or operator-controlled) enhanced network selection criterion might be inappropriately set depending on the respective situation of a user equipment or mobile station: both values of operator-provided enhanced network selection criteria that are too low (regarding a specific user equipment situation or reception conditions) as well as values of operator-provided enhanced network selection criteria that are too high might lead to drawbacks such as, e.g., a well-suited radio cell is not regarded as a suitable radio cell (due to the operator-provided enhanced network selection criterion being too high) and/or finding a well-suited cell takes quite an important amount of time.

Obviously, finding the correct SENSE-levels (or HPLMN-provided (or operator-controlled) enhanced network selection criterion) is only possible based on trial and error and finding the correct SENSE-levels (especially for stationary user equipments or mobile stations) might take very long, since a new network selection is just triggered once the serving network is lost for some time.

As opposed thereto, according to the present invention, it is suggested to apply a different concept for defining the enhanced (and typically HPLMN-provided) network selection criterion (or SENSE-level or operator-controlled signal threshold (or enhanced network selection criterion) per access technology): by means of providing the reception measurement data to the home mobile communication network of the user equipment or mobile station, it is advantageously possible that the home mobile communication network is able to adapt or choose the correct SENSE-levels (i.e. the enhanced (and typically HPLMN-provided) network selection criterion or operator-controlled signal threshold) due to receiving (or having received from the user equipment) the reception measurement data, especially the actual field-strength and beneficially the quality of the received signal and/or the minimum field-strength/quality criteria (RxaccesLevMin, S-Criterion) for registration in the network. Hence, by means of the transmission, by the user equipment (and the reception by the respective home mobile communication network), of the reception measurement data, it is advantageously possible, according to the present invention, to dramatically improve the finding of the correct SENSE-levels (or the enhanced network selection criterion or operator-controlled signal threshold) by the home mobile communication network (HPLMN) to be applied in the mobile communication network currently serving the user equipment (visited public land mobile network, VPLMN).

Hence, it is proposed according to the present invention to take these reception measurement data (i.e. parameters that are available in the user equipment) to the home mobile communication network such that the home mobile communication network is able to communicate an improved (or the correct) SENSE-level/enhanced network selection criterion or operator-controlled signal threshold.

According to the present invention, the mobile station is provided with connectivity to the home mobile communication network (especially via the visited mobile communication network) and transmits the reception measurement data to the home mobile communication network via non-access stratum signaling.

Hence, according to the present invention, it is advantageously possible to use NAS (None Access Stratum) - Signaling, which is logically a direct signaling between the user equipment and the respective core network entity (of the home mobile communication network), to transfer the related information (i.e. the reception measurement data).

In conventionally known mobile communication networks, such parameters are just visible/available in the user equipment (typically being in the visited PLMN or visited mobile communication network - and not in the home mobile communication network).

The SENSE-level (or the enhanced network selection criterion or operator-controlled signal threshold) per access technology, is in its nature an offset applied on top of the measured field Strength by the UE to just select networks exceeding the min Field-Strenght/Quality criteria (RxaccesLevMin, S-Criterion) being set by the visited network.

Hence, according to the present invention, it is supposed that the mobile station (especially a user equipment) is located in a radio environment comprising radio cells of a plurality of mobile communication networks, and the mobile station 20 (or user equipment 20) is related or associated to the (or its) home mobile communication network. Furthermore, the user equipment or mobile station is able to measure or to detect reception conditions regarding the plurality of available radio cells in view of conducting cell selection and/or network selection procedures. In this respect, the user equipment or mobile station is able to apply a cell selection criterion (per radio access technology) regarding cell selection (and/or regarding network selection) in order to consider a radio cell (whose radiofrequency signals are received by the user equipment 20) to be a suitable radio cell. Furthermore - regarding network selection by the user equipment 20 or mobile station 20 -, an enhanced network selection criterion is able to be applied, which is typically a SENSE-level or operator-controlled signal threshold typically provided by the home network of the user equipment. According to the present invention, in order to transmit reception measurement data and/or in order to subsequently conduct network selection, the method comprises the steps of the mobile station measuring or detecting the reception conditions regarding the plurality of available radio cells, and, based thereon, generating reception measurement data that are transmitted to the home mobile communication network via non-access stratum signaling. This transmission, of course, requires some kind of connectivity; thus, either subsequently or during the generation of the reception measurement data, the mobile station is provided with connectivity to the home mobile communication network, typically using one of the available mobile communication networks.

In the context of the present invention, the terms mobile station and user equipment are used more or less synonymously: a mobile station especially corresponds to a user equipment, i.e. comprising the mobile equipment with a USIM or UMTS (universal mobile telecommunications system) subscriber identity module, or a mobile equipment (especially in case that standalone non-public network are concerned)).

According to the present invention, it is advantageously possible and preferred that the reception measurement data are transmitted to the home mobile communication network such that
-- the unified data management, UDM, is used in case of the home mobile communication network being a 5G network, wherein the respective core network interface N8 is used.
-- the home subscriber server, HSS, is used in case of the home mobile communication network being a 4G network, wherein the respective core network interfaces S6a- is used.

It is thereby advantageously possible to realize and implement the inventive method in a comparatively simple and efficient manner.

According to the present invention, it is advantageously furthermore possible and preferred that the method further comprises, after the second step,
-- in a third step, the mobile station receiving an enhanced network selection criterion information indicating an updated value of the enhanced network selection criterion, from the home mobile communication network, and
-- in a fourth step, the mobile station subsequently performs network selection using, as the enhanced network selection criterion, the updated value corresponding to or indicated by the enhanced network selection criterion information.

It is thereby advantageously possible according to the present invention that a preliminary mobile communication network (and/or a preliminary radio cell) is used to transmit (by the mobile station or user equipment) the reception measurement data (to the home mobile communication network) and to receive (by the mobile station or user equipment) the enhanced network selection criterion information indicating the updated value of the enhanced network selection criterion (from the home mobile communication network). The choice of the preliminary mobile communication network might either be based on data stored in the mobile station or user equipment; however, alternatively, the mobile station might perform such (preliminary) registration with the preliminary radio cell or with the preliminary mobile communication network independently from any stored data (e.g. a user preferred network list information and/or an operator preferred network list information). In this respect, it might be especially advantageous for the mobile station or user equipment to minimize (electrical) power usage in order to get (or to be provided with) the preliminary connectivity - which is especially relevant for user equipments or mobile stations that are of the type of (or realize) machine type communication or internet-of-things devices.

According to the present invention, it is advantageously furthermore possible and preferred that, as part of the second step and in order to be provided with connectivity to the home mobile communication network, the mobile station registers with a radio cell of the available radio cells, this radio cell belonging to or being part of a visited mobile communication network.

It is thereby advantageously possible to realize and implement the inventive method in a comparatively simple and efficient manner.

According to the present invention, it is furthermore advantageously possible and preferred that a roaming agreement or arrangement exists, or is applied, between the visited mobile communication network and the home mobile communication network.

It is thereby advantageously possible to realize and implement the inventive method in a comparatively simple and efficient manner.

Especially, it could be advantageous and preferred that the preliminary mobile communication network to which a user equipment or mobile station initially registers (during the second step of the inventive method) corresponds to a visited mobile communication network (or visited public land mobile network, VPLMN) that the home mobile communication network or HPLMN has a roaming agreement with. However subsequently (i.e. in the fourth step of the inventive method), the user equipment or mobile station may register to another mobile communication network based on the decision taken by the home mobile communication network or home public land mobile network.

According to the present invention, it is furthermore advantageously possible and preferred that the reception measurement data comprises a list information comprising a reference information indicating the available radio cells and/or indicating their respective mobile communication networks, as well as, regarding each such available radio cell and/or regarding each such mobile communication networks, respectively, at least one out of the following:
-- a geo location of the mobile station if available and accessible
-- available Cell, Location area or Tracking area identifier of the available radio cells,
-- parts of or all parameter broadcasted via SIB (System Information Broadcast) on the cellular network of the currently serving cell as well as from possibly measured neighbor cells
-- Qrxlevmeas
-- Qqualmeas
-- Qqualmin
-- QqualminOffset
-- Qrxlevmin
-- QrxlevminOffset
-- RX access level min
-- Pcompensation
-- PEMAX1
-- PEMAX2
- PowerClass.

It is thereby advantageously possible to realize and implement the inventive method in a comparatively simple and efficient manner.

Furthermore, the present invention relates to a mobile station according to claim 7.

Furthermore, the present invention relates to a system or mobile communication network according to claim 8.

Additionally, the present invention relates to a program comprising a computer readable program code, which, when executed on a mobile station, causes the mobile station to perform the inventive method.

Still additionally, the present invention relates to a computer-readable medium comprising instructions which when executed on a mobile station, causes the mobile station to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a mobile station in a radio environment comprising a plurality of available radio cells of a plurality of mobile communication networks, each one of these available radio cells being associated, respectively, to at least one mobile communication network of the plurality of mobile communication networks, wherein the mobile station is related or associated to a home mobile communication network and able to measure or to detect reception conditions regarding the plurality of available radio cells.
Figure 2 schematically illustrates the mobile station comprising network selection data, especially stored in a memory module of the mobile station, typically the USIM or the universal integrated circuit card in case of the mobile station being a user equipment, or in another memory portion of the mobile equipment / mobile station.
Figure 3 schematically illustrates an example of a communication between the mobile station (or user equipment) on the one hand and its home mobile communication network on the other hand.
Figure 4 schematically illustrates a situation of the user equipment measuring different signal strength of the different radio cells.

### DETAILED DESCRIPTION

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

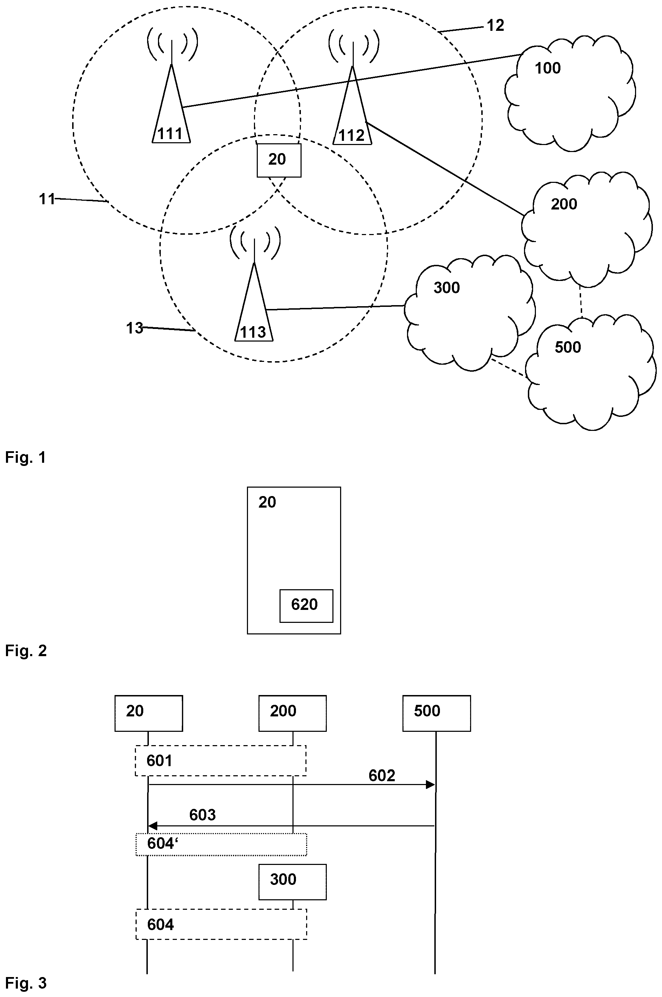

In Figure 1, a mobile station 20 (or user equipment 20) is schematically illustrated in a radio environment comprising a plurality of radio cells that are available to (i.e. physically reachable by) that considered mobile station or user equipment 20, the plurality of such (available) radio cells being of a plurality of mobile communication networks (or, each one of these available radio cells being associated, respectively, to at least one mobile communication network of the plurality of mobile communication networks).

In the exemplary representation of Figure 1, a first radio cell 11 is associated with or related to a first mobile communication network 100, a second radio cell 12 is associated with or related to a second mobile communication network 200, and a third radio cell 13 is associated with or related to a third mobile communication network 300.

The mobile station 20 or user equipment 20 is related or associated to a home mobile communication network 500 (or home public land mobile network 500) and is furthermore able to measure or to detect reception conditions regarding the plurality of available radio cells 11, 12, 13.

Schematically, a base station entity is represented regarding each one of the three available radio cells 11, 12, 13 that the mobile station 20 detects or "sees": A first base station entity 111 (typically but not necessarily of the first mobile communication network 100) generates or provides radio coverage of or regarding the first radio cell 11, a second base station entity 112 (typically but not necessarily of the second mobile communication network 200) generates or provides radio coverage of or regarding the second radio cell 12, and a third base station entity 113 (typically but not necessarily of the third mobile communication network 200) generates or provides radio coverage of or regarding the third radio cell 13.

In Figure 1, the mobile station 20 is shown being located within the radio coverage area (illustrated by means of dashed circles) of the first radio cell 11, the second radio cell 12, as well as the third radio cell 13. The mobile station 20 typically measures or detects reception conditions regarding the plurality of available radio cells 11, 12, 13, and subsequently selects and/or registers to a mobile communication network out of the plurality of mobile communication networks 100, 200, 300.

According to the present invention, it is supposed that the mobile station 20 (especially a user equipment, i.e. comprising the mobile equipment with a USIM or subscriber identity module, or a mobile equipment) is located in a radio environment, i.e. at the location of the mobile station 20 or user equipment 20 a plurality of mobile communication networks 100, 200, 300 are able to be received (by the mobile station 20 or user equipment 20). In addition, the mobile station 20 (or user equipment 20) is related or associated to the home mobile communication network 500, and it is able to measure or to detect reception conditions regarding the plurality of available radio cells 11, 12, 13 (of mobile communication networks 100, 200, 300) in view of conducting cell selection and/or network selection.

In this respect, according to the present invention, regarding cell selection, a cell selection criterion 610 is able to be applied (per radio access technology, i.e. especially, regarding each considered radio access technology, typically a different cell selection criterion is able to be applied) in order to consider a radio cell (whose radiofrequency signals are received by the user equipment 20) a suitable radio cell, wherein - regarding network selection by the user equipment 20 or mobile station 20 - an enhanced network selection criterion 620 is able to be applied, which enhanced network selection criterion 620 is typically a SENSE-level or operator-controlled signal threshold that is typically provided by the HPLMN (-operator).

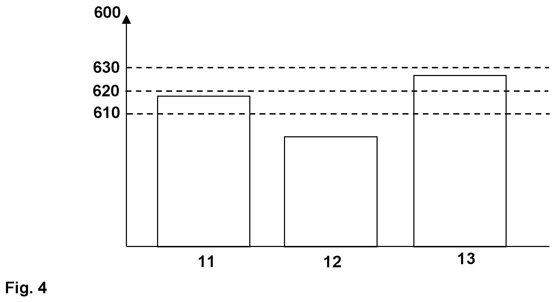

The cell selection criterion 610 and the enhanced network selection criterion 620 are schematically shown in Figure 4 which represents a situation of the user equipment 20 measuring different signal strength of the different radio cells 11, 12, 13.

Furthermore, according to the present invention, in order to transmit reception measurement data and/or in order to subsequently conduct network selection, the method comprises the steps of the mobile station 20 measuring or detecting the reception conditions regarding the plurality of available radio cells 11, 12, 13 and, based thereon, generating reception measurement data, wherein - either subsequently or during the generation of the reception measurement data - the mobile station 20 is provided with connectivity to the home mobile communication network 500 and transmits the reception measurement data to the home mobile communication network 500 via non-access stratum signaling.

Hence, after having generated the reception measurement data, the mobile station 20 or user equipment 20 transmits the reception measurement data to the (or its) home mobile communication network 500.

It is evident, that - in order to be able to transmit some data (here: the reception measurement data) to its home mobile communication network 500 preferably via NAS (None Access Stratum) - therefore the mobile station 20 or user equipment 20 needs to be provided, at least somehow, with some kind of (typically but not necessarily wireless) connectivity. However, according to the present invention, it is almost irrelevant which kind of connectivity is provided to the mobile station 20 or user equipment 20 and using which (radio access) technology - the only condition needed to be verified is to be able to exchange data with the home mobile communication network 500. After having transmitted the reception measurement data to the home mobile communication network 500, the home mobile communication network 500 is aware of the reception measurement data and is able to act accordingly, e.g. by means of adjusting the enhanced network selection criterion 620 (i.e. by means of transmitting an updated value of the enhanced network selection criterion 620 to the user equipment 20 or mobile station 20).

Especially, it is preferred according to the present invention that the inventive method further comprises (especially subsequent to the second step), in a third step, the user equipment or mobile station 20 receiving, from the home mobile communication network 500, an enhanced network selection criterion information indicating the mentioned updated value of the enhanced network selection criterion 620, and especially, in a subsequent fourth step, the mobile station 20 subsequently performs network selection using, as the enhanced network selection criterion 620, the updated value corresponding to or indicated by the enhanced network selection criterion information. Subsequently, the user equipment or mobile station 20 especially performs network selection and registers with a selected radio cell of the available radio cells 11, 12, 13, i.e. belonging to or being part of a selected mobile communication network, the selected mobile communication network being one of the available mobile communication networks 100, 200, 300.

In Figure 2, the mobile station 20 (or user equipment 20) is schematically shown comprising the enhanced network selection criterion 620. The enhanced network selection criterion 620 might either be statically stored in a memory module of the mobile station 20, typically the USIM or the universal integrated circuit card in case of the mobile station 20 being a user equipment 20, or in another memory portion of the mobile equipment / mobile station. Alternatively, the enhanced network selection criterion 620 are received from the home public land mobile network 500 or home mobile communication network 500 of the user equipment 20 or mobile station 20.

In Figure 3, an example of a communication between the mobile station 20 (or user equipment 20) on the one hand and its home mobile communication network 500 on the other hand is schematically and exemplarily shown, illustrating the above mentioned inventive method: According to the representation of Figure 3, the user equipment 20 or the mobile station 20 - considered to be located in a specific radio environment, e.g. according to the representation of Figure 1, i.e. comprising the first, second and third mobile communication network 100, 200, 300 (which radio environment is, however, not represented in Figure 3), and, especially, after being switched on or after recovery from loss of (radio) coverage - measures or detects the reception conditions of or regarding its radio environment, i.e. the plurality of available radio cells 11, 12, 13, and, based thereon, generates reception measurement data (corresponding to the first step according to the method of the present invention). In a first processing step 601, the user equipment 20 or mobile station 20 is provided with connectivity - exemplarily using the second mobile communication network 200 -, and in a second processing step 602, the mobile station 20 (or user equipment 20) transmits the (previously generated) reception measurement data to its home mobile communication network 500 (both the first and second processing steps 601, 602 correspond to the second step according to the method of the present invention). According to the present invention, there is not necessarily the need for further actions from the side of the home mobile communication network 500: Based on the reception measurement data generated by the user equipment 20 or mobile station 20 (and received by the home mobile communication network 500), the home mobile communication network 500 might simply collect further measurements - of either the same user equipment 20, e.g. in a different radio environment, e.g. at another time and/or at another location of the user equipment 20, or, especially, of another user equipment or a plurality of other user equipments at (roughly) the same location.

However, it is preferred that, in the third step, the user equipment or mobile station 20 receives, from the home mobile communication network 500, the enhanced network selection criterion information (in order to update the enhanced network selection criterion 620 value), and especially, in the subsequent fourth step, the mobile station 20 subsequently performs network selection using, as the enhanced network selection criterion 620, the updated value. Such a course of action is represented in Figure 3, which shows, in a third processing step 603, the mobile station 20 (or user equipment 20) receiving the enhanced network selection criterion information from the home mobile communication network 500. Especially based on, or using, such enhanced network selection criterion information, the user equipment 20 or mobile station 20 registers - in a fourth processing step 604 - with a selected radio cell of the available radio cells 11, 12, 13 belonging to or being part of a selected mobile communication network; in the exemplarily represented scenario shown in Figure 3, the selected mobile communication network corresponds to the third mobile communication network 300.

As already stated, in order for the mobile station 20 or user equipment 20 to be able to transmit the reception measurement data to the home mobile communication network 500, it needs to be provided with some kind of - especially (but not necessarily) wireless - connectivity, or preliminary connectivity, which is provided, in the exemplary situation shown in Figure 3, by the second mobile communication network 200. However, which kind of (preliminary) connectivity is used to transmit the reception measurement data (towards the home mobile communication network 500; as well as receive the network selection data from the home mobile communication network 500) is of little importance according to the present invention; hence, in case such (preliminary) connectivity is able to be provided without a proper registration (in the exemplary situation represented in Figure 3: at the second mobile communication network 200) and/or by means of using other (especially lesser) kinds of registrations (i.e. compared to proper registrations of a user equipment 20 or mobile station 20 with a mobile communication network) - such as, e.g., using wireless access points (using WLAN or Wifi-technology) and/or registrations that are aimed rather at machine type communication-oriented devices -, this might fit as well.

Hence, according to the present invention, as part of the second step and in order to be provided with (preliminary) connectivity to the home mobile communication network 500, the mobile station 20 preliminarily registers with a preliminary radio cell of the available radio cells 11, 12, 13, the preliminary radio cell (in the example represented in Figure 3, the second radio cell 12) belonging to or being part of a preliminary mobile communication network (in the example represented in Figure 3, the second mobile communication network 200), wherein the reception measurement data as well as the enhanced network selection criterion information are transmitted and/or received using the preliminary mobile communication network.

The choice of the preliminary mobile communication network might either be based on data stored in the mobile station or user equipment 20 (such as user preferred network list information and/or operator preferred network list information as stored on a universal integrated circuit card of or associated with the mobile station 20); however, alternatively, the mobile station 20 might perform such (preliminary) registration with the preliminary radio cell or with the preliminary mobile communication network independently from a user preferred network list information and/or an operator preferred network list information as stored on an universal integrated circuit card of or associated with the mobile station 20.

After the mobile station 20 or user equipment 20 having received - in the third processing step 603 - the network selection data from the home mobile communication network 500, the user equipment 20 or mobile station 20 is able to perform (in the fourth processing step 604) its (proper or, rather, definitive) registration with the selected one of the available radio cells 11, 12, 13, i.e. with the third mobile communication network 300 as the selected mobile communication network.

Of course, it might very well be the case that the result of the preliminary network selection and the result of the definitive network selection corresponds to one and the same mobile communication network (i.e. the preliminary mobile communication network, providing the preliminary connectivity, is the same as the selected mobile communication network) - in the representation of Figure 3, this would mean that instead of the fourth processing step 604 (represented as a dashed box), the alternative fourth processing step 604' (represented as a dotted box) would (have to) be performed: In such a scenario, in case that - in the second step of the inventive method - the registration with the preliminary mobile communication network (in order to provide the mobile station or user equipment 20 with connectivity) corresponds to a proper (or definitive) registration, the fourth step and the second step of the inventive method are performed, at least partly, in parallel; however, if, alternatively, in the second step of the inventive method, the registration with the preliminary mobile communication network (in order to provide the mobile station or user equipment 20 with connectivity) corresponds to only a preliminary or lesser (kind of) registration, in the fourth step (of the inventive method) the mobile station or user equipment 20 definitively registers with the selected mobile communication network.

The mentioned cell selection criterion 610 and the enhanced network selection criterion 620 are schematically shown in Figure 4 which represents a situation of the user equipment 20 measuring different signal strength of the different radio cells 11, 12, 13. The ordinate of the diagram shown corresponds to the signal strength 600 or an indicator thereof (such as a field strength value or signal quality parameter). According to mechanisms in conventionally known mobile communication networks, the user equipment 20 or mobile station 20 applies a conventionally defined cell selection criterion 610 in the cell selection stage. According to this (conventionally defined) cell selection criterion 610, both the first radio cell 11 and the third radio cell 13 would be regarded as suitable radio cells (according to or applying the cell selection criterion 610 in the cell selection stage) as both radio cells 11, 13 are schematically shown as having or providing (at the location of the user equipment 20 or mobile station 20) a signal strength corresponding to or exceeding the cell selection criterion 610. Besides the cell selection criterion 610, the enhanced network selection criterion 620 is able to be taken into consideration when it comes to select a public land mobile network. As the enhanced network selection criterion 620 is typically more demanding or requires an increased reception signal level or quality (schematically indicated, in Figure **4****,** by means of the enhanced network selection criterion 620 being represented above the conventionally defined cell selection criterion 610, i.e. the enhanced network selection criterion 620 is especially more restrictive compared to the conventionally defined cell selection criterion 610), only the third radio cell 13, or, rather, its associated public land mobile network 300, is considered, by the user equipment 20 and due to measurements conducted by the user equipment 20, to be taken into consideration. A further criterion is schematically indicated in Figure 4, corresponding to a high-quality criterion 630. The enhanced network selection criterion 620 (regarding the respective radio access technology) especially corresponds to a signal strength or signal strength level in between the cell selection criterion 610, and the high-quality criterion 630, and in order for a radio cell to be considered a suitable radio cell, the enhanced network selection criterion 620 needs to be passed; hence, in the exemplary representation of Figure 4, only the third radio cell 13 would be regarded as a suitable radio cell. However, in case that the HPLMN-provided enhanced cell selection criterion would be defined such that it is only slightly less demanding, also the first radio cell 11 would be regarded as a suitable radio cell.

## Claims

1. Method for transmitting reception measurement data and for subsequently conducting network selection by a mobile station (20) being in a radio environment comprising a plurality of available radio cells (11, 12, 13) of a plurality of mobile communication networks (100, 200, 300), each one of these available radio cells (11, 12, 13) being associated, respectively, to at least one mobile communication network of the plurality of mobile communication networks (100, 200, 300),
wherein the mobile station (20) is related or associated to a home mobile communication network (500), and wherein, while being in the considered radio environment, the mobile station (20) is able to measure or to detect reception conditions regarding the plurality of available radio cells (11, 12, 13), wherein regarding cell selection, a cell selection criterion (610) is applied, regarding a considered radio access technology, in order to consider a radio cell to be a suitable radio cell, **characterized in that**, regarding network selection by the mobile station (20) an enhanced network selection criterion (620) is applied,
wherein, in order to transmit reception measurement data and in order to subsequently conduct network selection, the method comprises the following steps:
-- in a first step, the mobile station (20) measures or detects the reception conditions regarding the plurality of available radio cells (11, 12, 13) and, based thereon, generates reception measurement data,
-- in a second step, the mobile station (20) is provided with connectivity to the home mobile communication network (500) and transmits the reception measurement data to the home mobile communication network (500) via non-access stratum signaling, wherein the provision of the reception measurement data enables their use by the home mobile communication network (500) to adapt or to choose the enhanced network selection criterion (620).

2. Method according to claim 1, wherein the reception measurement data are transmitted to the home mobile communication network (500) such that
-- the unified data management, UDM, is used in case of the home mobile communication network (500) being a 5G network, wherein the respective core network interface N8 is used.
-- the home subscriber server, HSS, is used in case of the home mobile communication network (500) being a 4G network, wherein the respective core network interfaces S6a is used.

3. Method according to one of the preceding claims, wherein the method further comprises, after the second step,
-- in a third step, the mobile station (20) receiving an enhanced network selection criterion information indicating an updated value of the enhanced network selection criterion (620), from the home mobile communication network (500), and
-- in a fourth step, the mobile station (20) subsequently performs network selection using, as the enhanced network selection criterion (620), the updated value corresponding to or indicated by the enhanced network selection criterion information.

4. Method according to one of the preceding claims, wherein, as part of the second step and in order to be provided with connectivity to the home mobile communication network (500), the mobile station (20) registers with a radio cell of the available radio cells (11, 12, 13), this radio cell belonging to or being part of a visited mobile communication network.

5. Method according to one of the preceding claims, wherein a roaming agreement or arrangement exists, or is applied, between the visited mobile communication network and the home mobile communication network (500).

6. Method according to one of the preceding claims, wherein the reception measurement data comprises a list information comprising a reference information indicating the available radio cells (11, 12, 13) and/or indicating their respective mobile communication networks (100, 200, 300), as well as, regarding each such available radio cell (11, 12, 13) and/or regarding each such mobile communication networks (100, 200, 300), respectively, at least one out of the following:
-- a geo location of the mobile station (20) if available and accessible
-- available Cell, Location area or Tracking area identifier of the available radio cells (11, 12, 13),
-- parts of or all parameter broadcasted via System Information Broadcast, SIB, ,especially according to 3GPP TS 25.331, TS 36.331 und TS 38.331, on the cellular network of the currently serving cell as well as from possibly measured neighbor cells
-- Qrxlevmeas
-- Qqualmeas
-- Qqualmin
-- QqualminOffset
-- Qrxlevmin
-- QrxlevminOffset
-- RX access level min
-- Pcompensation
-- PEMAX1
-- PEMAX2
- PowerClass.

7. Mobile station (20) for conducting network selection in a radio environment comprising a plurality of available radio cells (11, 12, 13) of a plurality of mobile communication networks (100, 200, 300), each one of these available radio cells (11, 12, 13) being associated, respectively, to at least one mobile communication network of the plurality of mobile communication networks (100, 200, 300),
wherein the mobile station (20) is related or associated to a home mobile communication network (500), and wherein, while being in the considered radio environment, the mobile station (20) is configured to measure or to detect reception conditions regarding the plurality of available radio cells (11, 12, 13), wherein regarding cell selection, the mobile station (20) is configured to apply a cell selection criterion (610), regarding a considered radio access technology, in order to consider a radio cell to be a suitable radio cell, **characterized in that** , regarding network selection, the mobile station (20) is configured to apply an enhanced network selection criterion (620),
wherein, in order to conduct network selection, the mobile station (20) is configured such that:
-- the mobile station (20) is configured to measure or detect the reception conditions regarding the plurality of available radio cells (11, 12, 13) and, based thereon, the mobile station (20) is configured to generate reception measurement data,
-- the mobile station (20), being provided with connectivity to the home mobile communication network (500), is configured to transmit the reception measurement data to the home mobile communication network (500) via non-access stratum signaling, wherein the provision of the reception measurement data enables their use by the home mobile communication network (500) to adapt or to choose the enhanced network selection criterion (620).

8. System or mobile communication network for conducting network selection of a mobile station (20) being in a radio environment comprising a plurality of available radio cells (11, 12, 13) of a plurality of mobile communication networks (100, 200, 300), each one of these available radio cells (11, 12, 13) being associated, respectively, to at least one mobile communication network of the plurality of mobile communication networks (100, 200, 300),
wherein the system or mobile communication network is configured to act as home mobile communication network (500) for or regarding the mobile station (20), and wherein, while being in the considered radio environment, the mobile station (20) is configured to measure or to detect reception conditions regarding the plurality of available radio cells (11, 12, 13), wherein regarding cell selection, the mobile station (20) is configured to apply a cell selection criterion (610), regarding a considered radio access technology, in order to consider a radio cell to be a suitable radio cell, **characterized in that**, regarding network selection, the mobile station (20) is configured to apply an enhanced network selection criterion (620),
wherein, in order to conduct network selection, the system or mobile communication network is configured such that:
-- the mobile station (20) is configured to measure or detect the reception conditions regarding the plurality of available radio cells (11, 12, 13) and, based thereon, the mobile station (20) is configured to generate reception measurement data,
the home mobile communication network (500) is configured to receive, via non-access stratum communication, reception measurement data, wherein the mobile station (20) is configured to generate the reception measurement data, based on the measurement or detection, by the mobile station (20), of reception conditions regarding the plurality of available radio cells (11, 12, 13), wherein the home mobile communication network (500) is configured to use the reception measurement data to adapt or choose the enhanced network selection criterion (620).

9. Program comprising a computer readable program code, which, when executed on a mobile station (20), causes the mobile station (20) to perform a method according one of claims 1 to 6.

10. Computer-readable medium comprising instructions which when executed on a mobile station (20), causes the mobile station (20) to perform a method according one of claims 1 to 6.

## Patentansprüche

1. Verfahren zur Übertragung von Empfangsmessdaten und zur anschließenden Durchführung einer Netzauswahl durch eine Mobilstation (20), die sich in einer Funkumgebung befindet, die eine Vielzahl verfügbarer Funkzellen (11, 12, 13) einer Vielzahl von Mobilfunknetzen (100, 200, 300) umfasst, wobei jede dieser verfügbaren Funkzellen (11, 12, 13) jeweils mindestens einem Mobilfunknetz der Vielzahl von Mobilfunknetzen (100, 200, 300) zugeordnet ist,
wobei die Mobilstation (20) einem Heimat-Mobilfunknetz (500) zugeordnet oder mit diesem verbunden ist, und wobei sich die Mobilstation (20), während sie sich in der betrachteten Funkumgebung befindet, in der Lage ist, Empfangsbedingungen bezüglich der Vielzahl verfügbarer Funkzellen (11, 12, 13) zu messen oder zu erfassen, wobei hinsichtlich der Zellauswahl ein Zellauswahlkriterium (610) bezüglich einer betrachteten Funkzugangstechnologie angewendet wird, um eine Funkzelle als geeignete Funkzelle zu betrachten, **dadurch gekennzeichnet, dass** hinsichtlich der Netzauswahl durch die Mobilstation (20) ein erweitertes Netzauswahlkriterium (620) angewendet wird,
wobei das Verfahren, um Empfangsmessdaten zu übertragen und um anschließend die Netzauswahl durchzuführen, die folgenden Schritte umfasst:
-- in einem ersten Schritt misst oder erfasst die Mobilstation (20) die Empfangsbedingungen bezüglich der Vielzahl verfügbarer Funkzellen (11, 12, 13) und erzeugt darauf basierend Empfangsmessdaten,
-- in einem zweiten Schritt wird der Mobilstation (20) Konnektivität zum Heimat-Mobilfunknetz (500) bereitgestellt und überträgt die Empfangsmessdaten über Non-Access-Stratum-Signalisierung an das Heimat-Mobilfunknetz (500),
wobei die Bereitstellung der Empfangsmessdaten deren Nutzung durch das Heimat-Mobilfunknetz (500) ermöglicht, um das erweiterte Netzauswahlkriterium (620) anzupassen oder zu wählen.

2. Verfahren nach Anspruch 1, wobei die Empfangsmessdaten an das Heimat-Mobilfunknetz (500) derart übertragen werden, dass
**--** die einheitliche Datenverwaltung, UDM, verwendet wird, falls das Heimat-Mobilfunknetz (500) ein 5G-Netz ist, wobei die jeweilige Kernnetzschnittstelle N8 verwendet wird.
-- der Heimteilnehmerserver, HSS, verwendet wird, falls das Heimat-Mobilfunknetz (500) ein 4G-Netz ist, wobei die jeweilige Kernnetzschnittstelle S6a verwendet wird.

3. Verfahren nach einem der vorhergehenden Ansprüche, wobei das Verfahren nach dem zweiten Schritt ferner umfasst,
-- in einem dritten Schritt empfängt die Mobilstation (20) eine Information zum erweiterten Netzauswahlkriterium, die einen aktualisierten Wert des erweiterten Netzauswahlkriteriums (620) anzeigt, vom Heimat-Mobilfunknetz (500), und
**--** in einem vierten Schritt führt die Mobilstation (20) anschließend die Netzauswahl unter Verwendung des aktualisierten Wertes, der der Information zum erweiterten Netzauswahlkriterium entspricht oder durch diese angezeigt wird, als das erweiterte Netzauswahlkriterium (620) durch.

4. Verfahren nach einem der vorhergehenden Ansprüche, wobei als Teil des zweiten Schrittes und um mit Konnektivität zum Heimat-Mobilfunknetz (500) versorgt zu werden, sich die Mobilstation (20) bei einer Funkzelle der verfügbaren Funkzellen (11, 12, 13) registriert, wobei diese Funkzelle zu einem besuchten Mobilfunknetz gehört oder Teil davon ist.

5. Verfahren nach einem der vorhergehenden Ansprüche, wobei eine Roaming-Vereinbarung oder -Anordnung zwischen dem besuchten Mobilfunknetz und dem Heimat-Mobilfunknetz (500) besteht oder angewendet wird.

6. Verfahren nach einem der vorhergehenden Ansprüche, wobei die Empfangsmessdaten eine Listeninformation umfassen, die eine Referenzinformation umfasst, welche die verfügbaren Funkzellen (11, 12, 13) und/oder ihre jeweiligen Mobilfunknetze (100, 200, 300) anzeigt, sowie bezüglich jeder solchen verfügbaren Funkzelle (11, 12, 13) und/oder bezüglich jedes solchen Mobilfunknetzes (100, 200, 300) jeweils mindestens eines der folgenden:
-- eine geografische Position der Mobilstation (20), falls verfügbar und zugänglich
**--** verfügbare Zellenkennung, Standortbereichskennung oder Tracking-Bereichskennung der verfügbaren Funkzellen (11, 12, 13),
**--** Teile von oder alle Parameter, die über Systeminformationsübertragung, SIB, ausgestrahlt werden, insbesondere gemäß 3GPP TS 25.331, TS 36.331 und TS 38.331, im Mobilfunknetz der aktuell versorgenden Zelle sowie von möglicherweise gemessenen Nachbarzellen
-- Qrxlevmeas
-- Qqualmeas
-- Qqualmin
-- QqualminOffset
-- Qrxlevmin
-- QrxlevminOffset
-- minimaler RX-Zugangspegel
-- Leistungskompensation
-- PEMAX1
-- PEMAX2
-- Leistungsklasse.

7. Mobilstation (20) zur Durchführung einer Netzauswahl in einer Funkumgebung, die eine Vielzahl verfügbarer Funkzellen (11, 12, 13) einer Vielzahl von Mobilfunknetzen (100, 200, 300) umfasst, wobei jede dieser verfügbaren Funkzellen (11, 12, 13) jeweils mindestens einem Mobilfunknetz der Vielzahl von Mobilfunknetzen (100, 200, 300) zugeordnet ist,
wobei die Mobilstation (20) einem Heimat-Mobilfunknetz (500) zugeordnet oder mit diesem verbunden ist, und wobei die Mobilstation (20), während sie sich in der betrachteten Funkumgebung befindet, dazu konfiguriert ist, Empfangsbedingungen bezüglich der Vielzahl verfügbarer Funkzellen (11, 12, 13) zu messen oder zu erfassen, wobei die Mobilstation (20) hinsichtlich der Zellauswahl dazu konfiguriert ist, ein Zellauswahlkriterium (610) bezüglich einer betrachteten Funkzugangstechnologie anzuwenden, um eine Funkzelle als geeignete Funkzelle zu betrachten, **dadurch gekennzeichnet, dass** die Mobilstation (20) hinsichtlich der Netzauswahl dazu konfiguriert ist, ein erweitertes Netzauswahlkriterium (620) anzuwenden,
wobei die Mobilstation (20), um die Netzauswahl durchzuführen, derart konfiguriert ist, dass:
-- die Mobilstation (20) dazu konfiguriert ist, die Empfangsbedingungen bezüglich der Vielzahl verfügbarer Funkzellen (11, 12, 13) zu messen oder zu erfassen und darauf basierend ist die Mobilstation (20) dazu konfiguriert, Empfangsmessdaten zu erzeugen,
-- die Mobilstation (20), der Konnektivität zum Heimat-Mobilfunknetz (500) bereitgestellt wird, dazu konfiguriert ist, die Empfangsmessdaten über Non-Access-Stratum-Signalisierung an das Heimat-Mobilfunknetz (500) zu übertragen, wobei die Bereitstellung der Empfangsmessdaten deren Nutzung durch das Heimat-Mobilfunknetz (500) ermöglicht, um das erweiterte Netzauswahlkriterium (620) anzupassen oder zu wählen.

8. System oder Mobilfunknetz zur Durchführung einer Netzauswahl einer Mobilstation (20), die sich in einer Funkumgebung befindet, die eine Vielzahl verfügbarer Funkzellen (11, 12, 13) einer Vielzahl von Mobilfunknetzen (100, 200, 300) umfasst, wobei jede dieser verfügbaren Funkzellen (11, 12, 13) jeweils mindestens einem Mobilfunknetz der Vielzahl von Mobilfunknetzen (100, 200, 300) zugeordnet ist, wobei das System oder Mobilfunknetz dazu konfiguriert ist, als Heimat-Mobilfunknetz (500) für oder bezüglich der Mobilstation (20) zu agieren, und wobei die Mobilstation (20), während sie sich in der betrachteten Funkumgebung befindet, dazu konfiguriert ist, Empfangsbedingungen bezüglich der Vielzahl verfügbarer Funkzellen (11, 12, 13) zu messen oder zu erfassen, wobei die Mobilstation (20) hinsichtlich der Zellauswahl dazu konfiguriert ist, ein Zellauswahlkriterium (610) bezüglich einer betrachteten Funkzugangstechnologie anzuwenden, um eine Funkzelle als geeignete Funkzelle zu betrachten, **dadurch gekennzeichnet, dass** die Mobilstation (20) hinsichtlich der Netzauswahl dazu konfiguriert ist, ein erweitertes Netzauswahlkriterium (620) anzuwenden,
wobei das System oder Mobilfunknetz, um die Netzauswahl durchzuführen, derart konfiguriert ist, dass:
-- die Mobilstation (20) dazu konfiguriert ist, die Empfangsbedingungen bezüglich der Vielzahl verfügbarer Funkzellen (11, 12, 13) zu messen oder zu erfassen und darauf basierend ist die Mobilstation (20) dazu konfiguriert, Empfangsmessdaten zu erzeugen,
das Heimat-Mobilfunknetz (500) dazu konfiguriert ist, über Non-Access-Stratum-Kommunikation Empfangsmessdaten zu empfangen, wobei die Mobilstation (20) dazu konfiguriert ist, die Empfangsmessdaten basierend auf der Messung oder Erfassung von Empfangsbedingungen bezüglich der Vielzahl verfügbarer Funkzellen (11, 12, 13) durch die Mobilstation (20) zu erzeugen, wobei das Heimat-Mobilfunknetz (500) dazu konfiguriert ist, die Empfangsmessdaten zu verwenden, um das erweiterte Netzauswahlkriterium (620) anzupassen oder zu wählen.

9. Programm, das einen computerlesbaren Programmcode umfasst, der, wenn er auf einer Mobilstation (20) ausgeführt wird, die Mobilstation (20) veranlasst, ein Verfahren gemäß einem der Ansprüche 1 bis 6 durchzuführen.

10. Computerlesbares Medium, das Anweisungen umfasst, die, wenn sie auf einer Mobilstation (20) ausgeführt werden, die Mobilstation (20) veranlassen, ein Verfahren gemäß einem der Ansprüche 1 bis 6 durchzuführen.

## Revendications

1. Procédé de transmission de données de mesure de réception et de réalisation ultérieure d'une sélection de réseau par une station mobile (20) se trouvant dans un environnement radio comprenant une pluralité de cellules radio disponibles (11, 12, 13) d'une pluralité de réseaux de communication mobile (100, 200, 300), chacune de ces cellules radio disponibles (11, 12, 13) étant associée, respectivement, à au moins un réseau de communication mobile de la pluralité de réseaux de communication mobile (100, 200, 300),
dans lequel la station mobile (20) est liée ou associée à un réseau de communication mobile domestique (500), et dans lequel, tout en étant dans l'environnement radio considéré, la station mobile (20) est capable de mesurer ou de détecter des conditions de réception concernant la pluralité de cellules radio disponibles (11, 12, 13), dans lequel concernant la sélection de cellule, un critère de sélection de cellule (610) est appliqué, concernant une technologie d'accès radio considérée, afin de considérer une cellule radio comme étant une cellule radio appropriée, **caractérisé en ce que**, concernant la sélection de réseau par la station mobile (20), un critère de sélection de réseau amélioré (620) est appliqué,
dans lequel, afin de transmettre des données de mesure de réception et afin de réaliser ultérieurement la sélection de réseau, le procédé comprend les étapes suivantes :
-- dans une première étape, la station mobile (20) mesure ou détecte les conditions de réception concernant la pluralité de cellules radio disponibles (11, 12, 13) et, sur cette base, génère des données de mesure de réception,
**--** dans une deuxième étape, la station mobile (20) est pourvue de connectivité au réseau de communication mobile domestique (500) et transmet les données de mesure de réception au réseau de communication mobile domestique (500) via une signalisation de strate sans accès,
dans lequel la fourniture des données de mesure de réception permet leur utilisation par le réseau de communication mobile domestique (500) pour adapter ou choisir le critère de sélection de réseau amélioré (620).

2. Procédé selon la revendication 1, dans lequel les données de mesure de réception sont transmises au réseau de communication mobile domestique (500) de telle sorte que
-- la gestion unifiée des données, UDM, est utilisée dans le cas où le réseau de communication mobile domestique (500) est un réseau 5G, dans lequel l'interface de réseau central respective N8 est utilisée.
-- le serveur d'abonnés domestiques, HSS, est utilisé dans le cas où le réseau de communication mobile domestique (500) est un réseau 4G, dans lequel l'interface de réseau central respective S6a est utilisée.

3. Procédé selon l'une des revendications précédentes, dans lequel le procédé comprend en outre, après la deuxième étape,
-- dans une troisième étape, la station mobile (20) recevant une information de critère de sélection de réseau amélioré indiquant une valeur mise à jour du critère de sélection de réseau amélioré (620), du réseau de communication mobile domestique (500), et
-- dans une quatrième étape, la station mobile (20) effectue ultérieurement la sélection de réseau en utilisant, comme critère de sélection de réseau amélioré (620), la valeur mise à jour correspondant à ou indiquée par l'information de critère de sélection de réseau amélioré.

4. Procédé selon l'une des revendications précédentes, dans lequel, dans le cadre de la deuxième étape et afin d'être pourvue de connectivité au réseau de communication mobile domestique (500), la station mobile (20) s'enregistre auprès d'une cellule radio des cellules radio disponibles (11, 12, 13), cette cellule radio appartenant à ou faisant partie d'un réseau de communication mobile visité.

5. Procédé selon l'une des revendications précédentes, dans lequel un accord d'itinérance ou arrangement existe, ou est appliqué, entre le réseau de communication mobile visité et le réseau de communication mobile domestique (500).

6. Procédé selon l'une des revendications précédentes, dans lequel les données de mesure de réception comprennent une information de liste comprenant une information de référence indiquant les cellules radio disponibles (11, 12, 13) et/ou indiquant leurs réseaux de communication mobile respectifs (100, 200, 300), ainsi que, concernant chaque cellule radio disponible (11, 12, 13) et/ou concernant chaque réseau de communication mobile (100, 200, 300), respectivement, au moins l'un des éléments suivants :
-- une géolocalisation de la station mobile (20) si disponible et accessible
-- identifiant de cellule, identifiant de zone de localisation ou identifiant de zone de suivi disponible des cellules radio disponibles (11, 12, 13),
**--** parties de ou tous les paramètres diffusés via la diffusion d'informations système, SIB, en particulier selon 3GPP TS 25.331, TS 36.331 et TS 38.331, sur le réseau cellulaire de la cellule de service actuellement active ainsi que des cellules voisines éventuellement mesurées
-- Qrxlevmeas
-- Qqualmeas
-- Qqualmin
-- QqualminOffset
-- Qrxlevmin
-- QrxlevminOffset
-- niveau d'accès RX minimum
-- compensation de puissance
-- PEMAX1
-- PEMAX2
-- classe de puissance.

7. Station mobile (20) pour effectuer une sélection de réseau dans un environnement radio comprenant une pluralité de cellules radio disponibles (11, 12, 13) d'une pluralité de réseaux de communication mobile (100, 200, 300), chacune de ces cellules radio disponibles (11, 12, 13) étant associée, respectivement, à au moins un réseau de communication mobile de la pluralité de réseaux de communication mobile (100, 200, 300),
dans laquelle la station mobile (20) est liée ou associée à un réseau de communication mobile domestique (500), et dans laquelle, tout en étant dans l'environnement radio considéré, la station mobile (20) est configurée pour mesurer ou détecter des conditions de réception concernant la pluralité de cellules radio disponibles (11, 12, 13), dans laquelle concernant la sélection de cellule, la station mobile (20) est configurée pour appliquer un critère de sélection de cellule (610), concernant une technologie d'accès radio considérée, afin de considérer une cellule radio comme étant une cellule radio appropriée, **caractérisée en ce que**, concernant la sélection de réseau, la station mobile (20) est configurée pour appliquer un critère de sélection de réseau amélioré (620),
dans laquelle, afin d'effectuer la sélection de réseau, la station mobile (20) est configurée de telle sorte que :
-- la station mobile (20) est configurée pour mesurer ou détecter les conditions de réception concernant la pluralité de cellules radio disponibles (11, 12, 13) et, sur cette base, la station mobile (20) est configurée pour générer des données de mesure de réception,
-- la station mobile (20), étant pourvue de connectivité au réseau de communication mobile domestique (500), est configurée pour transmettre les données de mesure de réception au réseau de communication mobile domestique (500) via une signalisation de strate sans accès, dans laquelle la fourniture des données de mesure de réception permet leur utilisation par le réseau de communication mobile domestique (500) pour adapter ou choisir le critère de sélection de réseau amélioré (620).

8. Système ou réseau de communication mobile pour effectuer une sélection de réseau d'une station mobile (20) se trouvant dans un environnement radio comprenant une pluralité de cellules radio disponibles (11, 12, 13) d'une pluralité de réseaux de communication mobile (100, 200, 300), chacune de ces cellules radio disponibles (11, 12, 13) étant associée, respectivement, à au moins un réseau de communication mobile de la pluralité de réseaux de communication mobile (100, 200, 300),
dans lequel le système ou réseau de communication mobile est configuré pour agir en tant que réseau de communication mobile domestique (500) pour ou concernant la station mobile (20), et dans lequel, tout en étant dans l'environnement radio considéré, la station mobile (20) est configurée pour mesurer ou détecter des conditions de réception concernant la pluralité de cellules radio disponibles (11, 12, 13), dans lequel concernant la sélection de cellule, la station mobile (20) est configurée pour appliquer un critère de sélection de cellule (610), concernant une technologie d'accès radio considérée, afin de considérer une cellule radio comme étant une cellule radio appropriée, **caractérisé en ce que**, concernant la sélection de réseau, la station mobile (20) est configurée pour appliquer un critère de sélection de réseau amélioré (620),
dans lequel, afin d'effectuer la sélection de réseau, le système ou réseau de communication mobile est configuré de telle sorte que :
-- la station mobile (20) est configurée pour mesurer ou détecter les conditions de réception concernant la pluralité de cellules radio disponibles (11, 12, 13) et, sur cette base, la station mobile (20) est configurée pour générer des données de mesure de réception,
le réseau de communication mobile domestique (500) est configuré pour recevoir, via une communication de strate sans accès, des données de mesure de réception, dans lequel la station mobile (20) est configurée pour générer les données de mesure de réception, sur la base de la mesure ou détection, par la station mobile (20), de conditions de réception concernant la pluralité de cellules radio disponibles (11, 12, 13), dans lequel le réseau de communication mobile domestique (500) est configuré pour utiliser les données de mesure de réception pour adapter ou choisir le critère de sélection de réseau amélioré (620).

9. Programme comprenant un code de programme lisible par ordinateur, qui, lorsqu'il est exécuté sur une station mobile (20), amène la station mobile (20) à effectuer un procédé selon l'une des revendications 1 à 6.

10. Support lisible par ordinateur comprenant des instructions qui, lorsqu'elles sont exécutées sur une station mobile (20), amènent la station mobile (20) à effectuer un procédé selon l'une des revendications 1 à 6.
